Europäisches Patentamt

European Patent Office

Office européen des brevets

(11) Veröffentlichungsnummer : **0 250 615 B1**

# EUROPÄISCHE PATENTSCHRIFT

(45) Veröffentlichungstag der Patentschrift :
30.11.88

(51) Int. Cl.⁴ : **F 16 D 69/02**

(21) Anmeldenummer : 86108570.2

(22) Anmeldetag : 24.06.86

(54) **Verfahren zum Herstellen von Reibbelägen für Reibungskupplungen oder dergleichen und danach hergestellter Reibbelag.**

(43) Veröffentlichungstag der Anmeldung :
07.01.88 Patentblatt 88/01

(45) Bekanntmachung des Hinweises auf die Patenterteilung : 30.11.88 Patentblatt 88/48

(84) Benannte Vertragsstaaten :
AT DE FR GB IT NL

(56) Entgegenhaltungen :
EP-A- 0 093 790
FR-A- 2 359 323

(73) Patentinhaber : **Raybestos Industrie-Produkte GmbH**
**Bahnstrasse 48-50**
**5608 Radevormwald (DE)**

(72) Erfinder : **Wagner, Günter K.W.**
**Suerlandweg 15**
**D-4740 Oelde (DE)**
Erfinder : **Braches, Ernst, Dr.**
**Vieringhausen 101**
**D-5630 Remscheid 1 (DE)**

(74) Vertreter : **Türk, Gille, Hrabal**
**Bruckner Strasse 20**
**D-4000 Düsseldorf 13 (DE)**

**Beschreibung**

Die Erfindung betrifft ein Verfahren zum Herstellen von Reibbelägen für Reibungskupplungen oder dergleichen, bei dem Reibmaterialien, Fasern und Füllstoffe zu einer homogenen Masse miteinander vermischt werden, diese Masse in wenigstens einen Strang gepreßt wird, die so erzeugten Stränge zu einer Scheibe gewickelt werden und die Scheibe heißgepreßt, ausgehärtet und anschließend an ihren Oberflächen durch spanende Bearbeitung geglättet wird. Außerdem betrifft die Erfindung einen nach diesem Verfahren hergestellten Reibbelag.

Es ist bekannt (FR-A-2 359 323), anorganische Fasern, nämlich Asbestfasern, zu verwenden, die durch das Strangpressen so gut wie möglich in Längsrichtung der erzeugten Stränge ausgerichtet bzw. orientiert werden sollen. Dementsprechend wird die Länge der Fasern so gewählt, daß sie größer als der Durchmesser der Strangpreßdüse ist. So sind Fasern mit einer Länge bis zu 1,3 cm verwandt worden. Unabhängig davon, daß Asbest wegen seiner Gesundheitsschädlichkeit nicht mehr für Reibbeläge eingesetzt werden soll, hat es sich als nachteilig erwiesen, derart lange Fasern einzusetzen, denn durch die einseitige Längsorientierung der Fasern ergeben sich im fertigen Reibbelag Ungleichförmigkeiten, die zu Festigkeitsminderungen und zu einem Verzug des fertigen Reibbelages führen können.

Ferner hat man in ebenfalls einseitiger Faserorientierung, als Fasern textile Stapelfasern mit einer mittleren Länge von 6 mm eingesetzt (EP-A-0093790), und die ausgepreßten Stränge unmittelbar im Anschluß an das Strangpressen wellenförmig einander überkreuzend mehrlagig zu einer ringförmigen Scheibe aufgewickelt, die dann zum fertigen Reibbelag weiterverarbeitet wird.

Auch hier wurde festgestellt, daß trotz homogener Verteilung der Fasern im strangzupressenden Gemisch sich beim Strangpressen zumindest im Oberflächenbereich der Stränge eine Längsorientierung der Fasern einstellt, so daß die zunächst vorhandene Homogenität des Gemisches im stranggepreßten Produkt nicht in ausreichender Weise gewährleistet ist. Dementsprechend sind im fertigen Reibbelag gelegentlich Unregelmäßigkeiten im Festigkeitsverhalten zu beobachten, ebenso wie ein Verzug der Reibbeläge nicht ganz zu vermeiden ist.

Der Erfindung liegt die Aufgabe zugrunde, Reibbeläge für Reibungskupplungen und dergleichen in einfacher Weise herstellen zu können, die eine optimal gleichförmige Struktur bei gleichförmiger Festigkeit und geringer Verzugsneigung aufweisen.

Diese Aufgabe wird erfindungsgemäß dadurch gelöst, daß den zu den Strängen auszupressenden Reibmaterialien, Fasern und Füllstoffen zum Einstellen der Verdichtungsfähigkeit des auszupressenden Gemisches Verarbeitungshilfsmittel wie Talkum oder auch benetzende Mittel zugesetzt werden und Fasern mit einer mittleren Länge verwendet werden, die gleich oder geringer als der Durchmesser der gepreßten Stränge ist.

Wegen der Verwendung von Talkum oder anderen, ähnlich wirkenden, trockenen oder auch benetzenden Verarbeitungshilfsmitteln in der Reibmaterialmischung ist eine homogene Vermischung zu einem gut verdichtbaren Gemisch möglich, in welchem die Fasern die gewünschte regellose Verteilung und Orientierung einnehmen. Das Gemisch der gut zu verdichtenden Konsistenz kann zu den die Reibeläge bildenden Strängen ausgepreßt werden, ohne daß die verhältnismäßig kurzen Fasern beim Auspressen eine regelmäßige Orientierung, nämlich in Längsrichtung, erfahren. Im Oberflächenbereich der ausgepreßten Stränge wird sich zwar eine gewisse Längsorientierung der Fasern nicht vermeiden lassen, jedoch wird die Faserorientierung im Kern der Stränge nicht beeinträchtigt, so daß im fertigen Reibbelag eine im wesentlichen regellose und somit gleichförmige Verteilung der Fasern und deren Ausrichtung gewährleistet ist. Somit haben die fertigen Reibbeläge eine optimale einheitliche Festigkeit und eine geringe Verzugsneigung.

Werden die ausgepreßten Stränge wellenförmig einander überkreuzend zu den Reibelagscheiben gewickelt, kann die Faserverteilung noch verbessert werden. Insbesondere ergeben sich keine Ablösungserscheinungen zwischen den gewickelten Strängen aufgrund von Festigkeitsunterschieden, d. h., eine Rißbildung in Umfangsrichtung wird vermieden.

Wegen der äußerst homogenen Verteilung der einzelnen Bestandteile des Reibbelages und insbesondere der ungeregelten und somit gleichförmigen Faserverteilung nicht nur im Ausgangsgemisch, sondern auch in den ausgepreßten Strängen, aus denen der Reibbelag gewickelt wird, ergibt sich eine bisher beim Strangpreßverfahren nicht erreichte Gleichförmigkeit der Materialeigenschaften des fertigen Reibbelages, so daß auch bisher stets kritische Stellen, nämlich zwischen zwei verhältnismäßig dicht nebeneinander liegenden im Reibbelag anzubringenden Löchern, nicht zu Rißbildung oder sonstigen Materialproblemen führen.

Das für die Erstellung der gewünschten, leicht verdichtbaren Konsistenz verwendete Verarbeitungshilfsmittel wie z. B. Talkum ist in einer Menge von 1 bis 15 Gew.-% der Gesamtmasse des auszupressenden Gemisches vorgesehen, wobei vorzugsweise 1 bis 5 Gew.-% der Gesamtmasse eingesetzt werden. Die Fasern können organische oder asbestfreie anorganische Fasern oder ein Gemisch aus derartigen Fasern mit einer mittleren Länge der einzelnen Fasern zwischen 2 und 6 mm sein, d. h., die Länge der Einzelfasern beträgt maximal 6 mm. Falls ein Gemisch aus anorganischen und organischen Fasern verwendet wird, können diese in einem Verhältnis von 30 zu 70 bis 70 zu 30 Gew.-% vorgesehen werden.

Erfindungsgemäß werden also verhältnismäßig kurze Fasern verwendet, die homogen im Reibmaterial verteilt werden. Da die Faserlänge nicht größer als der Durchmesser der zum Auspressen der zum Wickeln der Reibbeläge benutzten Stränge ist, ergibt sich beim Strangpressen keine ungünstige Faserorientierung. Vielmehr kann, obwohl sich im Oberflächenbereich der Stränge eine gewisse Längsorientierung der Fasern nicht vermeiden läßt, die Faserverteilung über den Strangquerschnitt als gleichförmig, d. h. unorientiert bezeichnet werden, d. h., die Fasern erstrecken sich in allen möglichen Richtungen in mehr oder weniger gleichförmiger Verteilung.

Wegen dieser Faserverteilung erhält man erfindungsgemäß Reibbeläge, die über ihre gesamte Fläche und ihren gesamten Querschnitt eine gleichförmige Faserverteilung aufweisen und somit keine Inhomogenitäten zeigen.

Organische Fasern wie Polyacryl- und Aramidfasern sorgen insbesondere bei Temperaturbeanspruchung durch ihren Beitrag bei der Ausbildung einer Reibkohleschicht für eine große Konstanz des Reibwertes. Dieses konstante Reibwertverhalten über einen größeren Temperaturbereich führt zu einer Verbesserung des Komforts beim Anfahrvorgang, d. h., die Rupfneigung eines Fahrzeuges, dessen Kupplung einen erfindungsgemäßen Reibbelag aufweist, wird geringer.

Da das homogen vermischte und stranggepreßte Reibbelagmaterial unmittelbar, d. h. ohne Zwischenlagerung, zu einem Reibbelag gewickelt bzw. weiterverarbeitet werden kann, lassen sich Reibbeläge erfindungsgemäß besonders wirtschaftlich herstellen.

Das strangzupressende Gemisch kann eine hochviskose Masse oder aber auch eine leicht verdichtbare, völlig trockene Masse sein, so daß verhältnismäßig wenig Verarbeitungshilfsmittel benötigt werden. Dementsprechend sind verhältnismäßig geringe oder auch gar keine Trocknungszeiten und höchstens nur ein verhältnismäßig geringer Energiebedarf für die Trocknung notwendig. Als benetzende Verarbeitungshilfsmittel werden beispielsweise Kohlenwasserstoffverbindungen, wässrige Dispersionen oder Knetöle eingesetzt.

Beispielsweise werden die fasrigen Bestandteile der strangzupressenden Masse in einem Hochleistungsmischer aufgeschlossen und mit den Reibmaterialien und den Verarbeitungshilfsmitteln zu einer Masse vermischt, die in Stränge gepreßt wird. Das Strangpressen kann kontinuierlich oder auch diskontinuierlich durchgeführt werden. Beim Strangpressen wird das Gemisch in der Strangpreßdüse komprimiert. Die so hergestellten Stränge lassen sich exakt dosiert über ein nachgeschaltetes Förderelement oder direkt mittels einer Wickelvorrichtung zu ringförmigen Reibbelag-Rohlingen ablegen.

Die eingesetzten Verarbeitungshilfsmittel dienen dazu, um den Reibzement und die in diesem als Verstärkung vorgesehenen Fasern zu einer geschmeidigen Masse zu verbinden, die beim Strangpreßvorgang eine gezielte Faserorientierung gewährleistet.

Die Verarbeitungshilfsmittel werden dosiert in einer Menge eingesetzt, damit die auszupressende Masse eine Geschmeidigkeit aufweist, welche in Verbindung mit dem Durchmesser der Strangpreßdüse von beispielsweise 6 bis 8 mm eine Faserverteilung im ausgepreßten Strang liefert, die beispielsweise zusammen mit einem wellenförmigen Ablegen der Stränge eine Faserorientierung im fertigen Reibbelag ergibt, welche einen minimalen Verzug des Reibbelages gewährleistet.

Beeinflußt werden die Fließeigenschaften des fertigen Gemisches in der Strangpresse in sehr starkem Maße von der Temperatur des Gemisches, die vorzugsweise zwischen 30 und 60 °G liegen sollte. Eine weitere Möglichkeit, das Fließverhalten des Gemisches und damit die Lage bzw. Orientierung der darin enthaltenen Fasern zu beeinflussen, ist dadurch gegeben, daß ein Verarbeitungshilfsmittel dem Gemisch bei der Aufbereitung zugefügt wird.

Wird dazu Talkum eingesetzt, sollte es am Gesamtgemisch einen Anteil zwischen 1 und 5 Gew.-% haben, um einerseits das Fließverhalten bzw. die Geschmeidigkeit des Gemisches zu verbessern und um andererseits die gewünschte Reibwertkonstanz des fertigen Reibbelages nicht zu beeinträchtigen.

Über den Querschnitt eines ausgepreßten erfindungsgemäßen Stranges ergibt sich eine Faserverteilung, bei der in den Randbereichen eine gewisse Ausrichtung der Fasern in Auspreßrichtung bzw. Längsrichtung des Stranges gegeben ist, sich in der Mitte des Stranges aber die gleichförmige bzw. gleichmäßige Verteilung der Fasern mit in alle Richtungen weisender Orientierung beibehalten ist. Auf diese Weise wird nicht nur eine Verringerung des Verzuges des fertigen Reibbelages erreicht, sondern auch eine höhere Elastizität desselben, die wiederum ein gleichförmiges Anfahrverhalten von mit derartigen Reibungskupplungen ausgestatteten Fahrzeugen bewirkt.

Die aus den gepreßten Strängen gewickelten Reibbelag-Rohlinge werden in einer Preßform heißgepreßt und durch eine Nachhärtung der vernetzbaren Bestandteile der Belagmaterialien ausgehärtet. Danach erfolgt die Endbearbeitung des Reibbelages durch Abschleifen der Oberfläche zum fertigen Reibbelag.

Durch intensive Vermischung der Bestandteile der Reibbeläge, d. h. von Reibmaterialien, Fasern und Verarbeitungshilfsmitteln, und durch das anschließende Strangpressen des so enstandenen Gemisches erhält man ein hochgradig homogenes Material, aus dem dosiert Rohlinge für Reibbeläge hergestellt werden können. Die so erzeugten Stränge können wellenförmig einander überkreuzend oder spiralförmig in einer oder mehreren Lagen zu einer Reibbelagscheibe gewickelt werden, in der die Fasern eine optimale Orientierung in allen Richtungen haben und somit eine optimale Verstärkungswirkung liefern.

Zum Herstellen der Reibbelag-Rohlinge sind maximal drei Arbeitsschritte erforderlich, so daß

eine wirtschaftliche Herstellung gewährleistet ist.

Das Gemisch, aus dem die zum Wickeln der Reibbelag-Rohlinge verwendeten Stränge oder Bänder ausgepreßt werden, wird beispielsweise wie folgt hergestellt :

Zunächst wird ein Vorgemisch erzeugt, das zu etwa 25 % aus Bindemitteln, etwa 8 % aus Vulkanisationsmitteln, etwa 10 % aus Metalloxiden, etwa 10 % aus Metallen etwa 20 % aus Füllstoffen und etwa 27 % aus Verarbeitungshilfsmitteln besteht. Parallel dazu werden Fasern mit einer mittleren maximalen Länge von maximal 6 mm in einem Mischer aufgeschlossen. Dann wird ein Gemisch aus 50 % des Vorgemisches, 40 % der aufgeschlossenen Fasern und 10 % Füllstoffen und den Verarbeitungshilfsmitteln erzeugt. Sobald dieses Gemisch nach ausreichender Mischzeit die gewünschte Homogenität hat, wird es zu Strängen oder Bändern stranggepreßt.

Alternativ können die faserigen Bestandteile in Gegenwart der Reibmaterialien und der Verarbeitungshilfsmittel aufgeschlossen werden, woraufhin das gewünschte homogene Gemisch erzeugt wird.

Als Fasermaterial kommen organische Fasern und mineralische Fasern wie Steinwolle und insbesondere Basaltwolle in Frage. Eine Faserkombination hat sich als besonders zweckmäßig und vorteilhaft für die Herstellung eines homogenen Reibbelag-Gemisches erwiesen, in welcher die Fasern nach dem Strangpressen eine optimale Orientierung in alle Richtungen aufweisen, d. h., in denen eine dreidimensionale gleichförmige Verteilung der Faserorientierung gewährleistet ist.

In der Zeichnung sind zwei Ausführungsbeispiele des erfindungsgemäßen Reibbelages für Reibungskupplungen schematisch dargestellt, und zwar zeigt

Fig. 1 eine Draufsicht auf eine Ausführungsform eines ringscheibenförmigen Reibbelages, der aus wellenförmig gelegten extrudierten Reibbelagmaterial-Strängen, von denen nur einige angedeutet sind, gebildet ist, und

Fig. 2 eine Draufsicht auf eine abgewandelte Ausführungsform eines ringscheibenförmigen Reibbelages, der aus spiralförmig gelegten Reibbelagmaterial-Strängen gebildet ist.

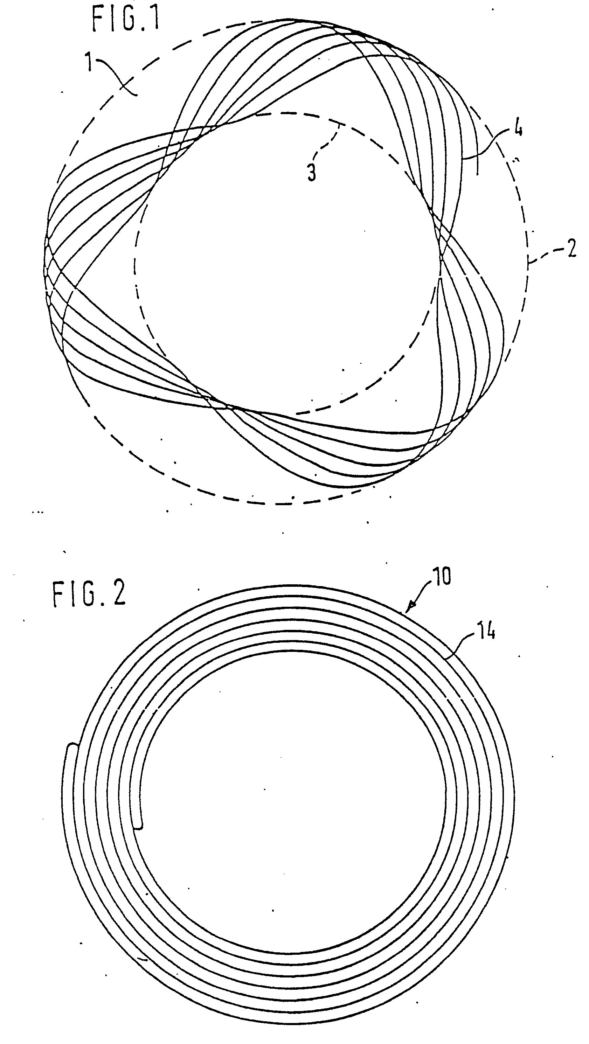

Der in Fig. 1 dargestellte ringscheibenförmige Reibbelag 1 hat eine gestrichelt angedeutete äußere kreisförmige Kontur 2 und eine ebenfalls gestrichelt angedeutete innere kreisförmige Kontur 3. Zwischen diesen beiden Konturen ist wenigstens ein aus Reibbelagmaterial extrudierter Strang 4 wellenförmig und in gegeneinander versetzter Anordnung derart gelegt, daß die Wendepunkte der entsprechenden Wellen die Konturen 2 und 3 bilden. In Fig. 1 ist zur Verdeutlichung der Darstellung nur ein geringer Teil eines Stranges 4 gezeigt. Die Darstellung des Stranges 4 sagt nichts über die Dicke desselben aus, ebensowenig der zwischen benachbarten Abschnitten des Stranges gezeigte Abstand. Der ausgepreßte Strang 4 wird wellenförmig und in mehreren Lagen übereinander überlappend abgelegt, bis eine ringförmige Scheibe als Reibbelag-Rohling entstanden ist. Die Wellen bilden dabei, wie Fig. 1 erkennen läßt, sowohl die äußere als auch die innere Kontur 2 und 3 des Reibbelages 1, wobei die Konturen in strichpunktierten Linien dort angedeutet sind, wo noch kein Strang 4 gelegt wurde.

Der in Fig. 2 dargestellte ringscheibenförmige Reibbelag 10 besteht aus einem spiralförmig gelegten Strang 14, dessen nebeneinander liegende Windungen einander berühren. Der Strang 14 kann in einer aber auch mehreren übereinander liegenden Lagen gelegt sein, was vom Durchmesser des aus Reibbelagmaterial ausgepreßten Stranges 14 und auch der gewünschten Dicke des fertigen Reibbelages 10 abhängt.

Die gemäß Fig. 1 und 2 aus ausgepreßten Reibbelagmaterial-Strängen 4 bis 14 gelegten ringscheibenförmigen Reibbeläge 1 bzw. 10 werden nach Fertigstellung des Rohlings heißgepreßt und ausgehärtet, woraufhin eine spanende Oberflächenbearbeitung des Rohlings erfolgt, so daß in der Regel die einzelnen Stränge am fertigen Reibbelag nicht mehr zu erkennen sind. Vielmehr hat der fertige Reibbelag eine weitgehend homogene und glatte Oberfläche bei guter Maßhaltigkeit.

Beim spiralförmigen Ablegen ausgepreßter Stränge 14 erzielt man aufgrund der in Umfangsrichtung weisenden Faserorientierung die höchsten Festigkeitswerte aller Ablegearten. Da man durch eine gezielte Auswahl der eingesetzten Fasern, und hier vor allem durch den Einsatz kurzer organischer Pulpe-Fasern mit einer Länge von unter 6 mm, eine sehr homogene Faserverteilung und damit eine sehr hohe Verstärkungswirkung erzielt, erhält man durch die spiralförmige Anordnung der ausgepreßten Stränge Festigkeitswerte, die denen garnhaltiger Kupplungsbeläge entsprechen.

Aus spiralförmig abgelegten ausgepreßten Strängen gebildete Kupplungsbeläge haben bereits bei kleineren Außendurchmessern für PKW-Anwendungen die Tendenz, sich durch die starke Ausrichtung der verwendeten Verstärkungsfasern in Umfangsrichtung zu verziehen. Diese Tendenz führt vor allem bei größeren Kupplungsbelägen für LKW-Anwendungen zu einem nicht mehr tolerierbaren Verzug des Reibbelages, der nicht reversibel ist und auch durch eine nachträgliche Wärmebehandlung nicht korrigiert werden kann.

Eine deutliche Verbesserung im Verzugsverhalten von aus stranggepreßten Strängen hergestellten Reibbelägen bzw. Kupplungsbelägen ergibt sich, wenn die Stränge wellenförmig abgelegt werden (Scatterwound-Ablegen). Die beim Strangpressen ausgerichteten Fasern sind bei dieser Art des Ablegens nicht nur hauptsächlich in Umfangsrichtung orientiert. Vielmehr ergibt sich auch eine Faserverteilung bzw. Faserausrichtung der gerichteten Fasern in radialer Richtung, wodurch ein gleichmäßiges Schwindungsverhalten erzielt und dadurch die Verzugstendenz verringert wird.

Der im Vergleich zu einem aus Strangmaterial spiralförmig gewickelten Kupplungsbelag mit hauptsächlich in Umfangsrichtung orientierten Verstärkungsfasern entstehende Festigkeitsabfall der erfindungsgemäß hergestellten Reibbeläge ist nur marginal und läßt sich durch die Optimierung der Faserverteilung beim Aufbereitungsprozeß im Mischer und durch eine Verbesserung der Faseranbindung ausgleichen.

**Patentansprüche**

1. Verfahren zum Herstellen von Reibbelägen, bei dem Reibmaterialien, Fasern und Füllstoffe zu einer homogenen Masse miteinander vermischt werden, diese Masse in wenigstens einen Strang gepreßt wird, die so erzeugten Stränge zu einer Scheibe gewickelt werden und die Scheibe getrocknet, heißgepreßt, ausgehärtet und anschließend an ihren Oberflächen durch spanende Bearbeitung geglättet wird, dadurch gekennzeichnet, daß den Reibmaterialien, Fasern und Füllstoffen zum Einstellen der Konsistenz eines auszupressenden, gut zu verdichtenden oder auch pastösen Gemisches Verarbeitungshilfsmittel wie Talkum oder benetzende Stoffe, die als Gleitmittel wirken, zugesetzt werden und daß Fasern mit einer mittleren Länge verwendet werden, die gleich oder geringer als der Durchmesser der gepreßten Stränge ist.

2. Verfahren nach Anspruch 1, dadurch gekennzeichnet, daß das Verarbeitungshilfsmittel (zum Beispiel Talkum oder benetzende Stoffe) in einer Menge von 1 bis 15 Gew.-% und vorzugsweise in einer Menge von 1-5 Gew.-% der Gesamtmasse zugegeben wird.

3. Verfahren nach Anspruch 1 oder 2, dadurch gekennzeichnet, daß organische oder asbestfreie anorganische Fasern mit einer mittleren Faserlänge zwischen 2 und 6 mm verarbeitet werden.

4. Verfahren nach Anspruch 3, dadurch gekennzeichnet, daß organische und anorganische Fasern in einem Verhältnis von 30 zu 70 bis 70 zu 30 Gew.-% verarbeitet werden.

5. Verfahren nach einem der Ansprüche 1 bis 4, dadurch gekennzeichnet, daß zum Strangpressen der zu einer Scheibe zu wickelnden Stränge ein Gemisch folgender Zusammensetzung (in Gewichtsprozent) erzeugt wird :

| Organische und anorganische Fasern | 20 bis 60 |
|---|---|
| Bindemittel | 5 bis 40 |
| Vulkanisationsmittel | 5 bis 20 |
| Metalloxide | 0 bis 20 |
| Metalle | 0 bis 25 |
| Füllstoffe | 5 bis 40 |
| Verarbeitungshilfsmittel | 1 bis 15 |

6. Reibbelag für Reibungskupplungen oder dergleichen, hergestellt aus einem zu Strängen mit einem mittleren Durchmesser von 6 mm ausgepreßten, gut zu verdichtenden, trockenen oder pastösen Gemisch gemäß einem der Ansprüche 1 bis 5.

**Claims**

1. Process for manufacturing friction linings, in which friction materials, fibers and fillers being mixed to form a homogeneous material, this material being pressed to at least one cord, said that way fabricated cords being wounded to a disc and the disc being dried, hot-pressed, cured and subsequently smoothened at its surfaces by chip machining, characterized in that processing aids like talcum or moistening substances acting as lubricant are added to said friction materials, fibers and fillers for adjusting the consistency of a squeezing out, well compressable or rather a pasty mixture and that fibers having a an average length equal to or smaller than the diameter of said pressed cords are used.

2. Process according to claim 1, characterized in that said processing aid (for example talcum or moistening substances) are added in an amount of 1 to 15 weight-% and preferably in an amount of 1 to 5 weight-% of total mass.

3. Process according to claim 1 or 2, characterized in that organic or asbestos-free inorganic fibers having an average fiber length between 2 and 6 mm are processed.

4. Process according to claim 3, characterized in that organic and inorganic fibers are processed being in a ratio between 30 to 70 and 70 to 30 weight-%.

5. Process according to one of the claims 1 to 4, characterized in that for extruding the cords to be wounded to a disc a mixture of the following composition (in weight-%) is produced :

| Organic and inorganic fibers | 20 to 60 |
|---|---|
| bonding agent | 5 to 40 |
| vulcanization agent | 5 to 20 |
| metal oxides | 0 to 20 |
| metals | 0 to 25 |
| fillers | 5 to 40 |
| processing aids | 1 to 15. |

6. Friction lining for friction clutches or the like fabricated from a dry or pasty mixture according to one of the claims 1 to 5 being squeezed out and wellcompressed to cords having an average diameter of 6 mm.

**Revendications**

1. Procédé de fabrication de garnitures de friction, dans lequel on mélange ensemble des matériaux de friction, fibres et charges, pour donner une masse, homogène, on extrude cette masse en au moins un boudin, on bobine les boudins ainsi obtenus pour donner un disque, puis on sèche, on presse à chaud, on durcit le disque, puis on le lisse sur ses surfaces par usinage avec enlèvement de copeaux, caractérisé en ce qu'aux matériaux de friction, fibres et charges, on ajoute, pour obtenir la consistance d'un mélange pouvant être extrudé, se comprimant bien ou même pâteux des adjuvants de traitement, comme le talc ou des produits mouillants qui agissent comme lubrifiants, et en ce qu'on emploie des fibres dont la longueur moyenne est égale ou inférieure au diamètre du boudin extrudé.

2. Procédé selon la revendication 1, caractérisé en ce que l'on ajoute l'adjuvant de traitement (par exemple talc ou produits mouillants) dans une proportion allant de 1 à 15 % en poids et de préférence dans une proportion allant de 1 à 5 % en poids de la masse totale.

3. Procédé selon la revendication 1 ou 2, caractérisé en ce que l'on traite des fibres organiques ou inorganiques, ne contenant pas d'amiante, d'une longueur moyenne de fibres entre 2 et 6 mm.

4. Procédé selon la revendication 3, caractérisé en ce que l'on traite des fibres organiques et inorganiques dans une proportion allant de 30 pour 70 jusqu'à 70 pour 30 % en poids.

5. Procédé selon une des revendications 1 à 4, caractérisé en ce que pour extruder un boudin à bobiner pour obtenir un disque, on produit un mélange de la composition suivante (en pour cent en poids) :

| | |
|---|---|
| fibres organiques et inorganiques | 20 à 60 |
| liant | 5 à 40 |
| produit de vulcanisation | 5 à 20 |
| oxyde métallique | 0 à 20 |
| métaux | 0 à 25 |
| charges | 5 à 40 |
| adjuvant de traitement | 1 à 15 |

6. Garniture de friction pour embrayages à friction ou analogues, fabriquée, selon l'une des revendications 1 à 5, à partir d'un mélange se comprimant bien, sec ou pâteux, extrudé pour donner des boudins d'un diamètre moyen de 6 mm.

FIG.1

FIG.2

0 250 615